# EUROPEAN PATENT APPLICATION

(11) **EP 3 522 290 A1**
(43) Date of publication of application: **07.08.2019**
(21) Application number: 16917156.8
(22) Date of filing: 29.09.2016
(51) Int. Cl.: H01M 10/44

(54) **FAST CHARGING CONTROL METHOD, FAST CHARGING CONTROL SYSTEM, AND TERMINAL DEVICE**

(71) Applicant: Shenzhen Royole Technologies Co., Ltd., Shenzhen, Guangdong 518172 (CN)
(72) Inventor: SHAN, Liangqing, Shenzhen Guangdong 518052 (CN)
(74) Representative: Hamer, Christopher K.
(86) International application number: PCT/CN2016/100726
(87) International publication number: WO 2018/058402

(57) **Abstract**

Disclosed are a method for controlling fast charging, a system for controlling fast charging, and a terminal device. The method includes the following. A current temperature of each of multiple parts of a terminal device in a charging process is detected (101). When the current temperature of each of at least two parts in the multiple parts falls within a preset temperature range corresponding to each of the at least two parts, a charging current corresponding to the current temperature of each of the at least two parts is determined according to a correspondence associated with each of the at least two parts, where the correspondence associated with each of the at least two parts is a correspondence between temperatures and charging currents (102). The terminal device is controlled to adjust a present charging current of the terminal device according to a lowest charging current in the determined charging currents, and the adjusted present charging current of the terminal device is equal to or lower than the lowest charging current (103). By means of the method, overheating caused by an overhigh charging current can be avoided, and accordingly a safety risk caused by the overheating in the fast charging process can be eliminated.

## Description

### TECHNICAL FIELD

The present disclosure relates to the technical field of communications, and particularly to a method for controlling fast charging, a system for controlling fast charging, and a terminal device.

### BACKGROUND

In recent years, fast charging technology has been increasingly developed. Fast charging is actually that a charging current in a constant current charging phase of a battery is increased to reduce the time of charging the battery. Presently, the charging current in the constant current charging phase of a terminal device has been constantly increased from below 500mA to above 2000mA.

Constant increase of the charging current really causes increase of a charging speed, but also brings a safety risk due to heat generated by charging. Furthermore, the higher the charging current is, the greater the heat generated by the charging is. The existing system for controlling fast charging controls adjustment of the charging current only according to the temperature of the battery. Actually, in the fast charging process, heat generated by other heating parts (for example, a central processor on a main board) of the terminal device can also affect heat balance of the terminal device. Therefore, in the fast charging process, if the adjustment of the charging current is controlled only according to the temperature of the battery, a safety problem may still occur due to overheating.

### SUMMARY

In view of the above, embodiments of the present disclosure provide a method for controlling fast charging, a system for controlling fast charging, and a terminal device, so as to eliminate a safety risk caused by overheating in a charging process.

Embodiments of the present disclosure provide a method for controlling fast charging. The method includes the following. A current temperature of each of multiple parts of a terminal device in a charging process is detected. A charging current corresponding to the current temperature of each of at least two parts in the multiple parts is determined according to a correspondence associated with each of the at least two parts, when the current temperature of each of the at least two parts falls within a preset temperature range corresponding to each of the at least two parts, where the correspondence associated with each of the at least two parts is a correspondence between temperatures and charging currents. The terminal device is controlled to adjust a present charging current of the terminal device according to a lowest charging current in the determined charging currents, and the adjusted present charging current of the terminal device is equal to or lower than the lowest charging current.

Embodiments of the present disclosure provide a system for controlling fast charging. The system includes a temperature detection module, a charging current determination module, and a charging control module. The temperature detection module is configured to detect a current temperature of each of multiple parts of a terminal device in a charging process. The charging current determination module is configured to determine a charging current corresponding to the current temperature of each of at least two parts in the multiple parts according to a correspondence associated with each of the at least two parts, when the current temperature of each of the at least two parts falls within a preset temperature range corresponding to each of the at least two parts, where the correspondence associated with each of the at least two parts is a correspondence between temperatures and charging currents. The charging control module is configured to control the terminal device to adjust a present charging current of the terminal device according to a lowest charging current in the determined charging currents, and the adjusted present charging current of the terminal device is equal to or lower than the lowest charging current.

Embodiments of the present disclosure provide a terminal device. The terminal device includes a memory storing a set of program codes, and a processor configured to invoke the set of program codes to execute the following. A current temperature of each of multiple parts of a terminal device in a charging process is detected. A charging current corresponding to the current temperature of each of at least two parts in the multiple parts is determined according to a correspondence associated with each of the at least two parts, when the current temperature of each of the at least two parts falls within a preset temperature range corresponding to each of the at least two parts, where the correspondence associated with each of the at least two parts is a correspondence between temperatures and charging currents. The terminal device is controlled to adjust a present charging current of the terminal device according to a lowest charging current in the determined charging currents, and the adjusted present charging current of the terminal device is equal to or lower than the lowest charging current.

In the embodiments of the present disclosure, when the current temperature of each of the at least two parts falls within the preset temperature range corresponding to each of the at least two parts, the charging current corresponding to the current temperature of each of the at least two parts is determined according to the correspondence associated with each of the at least two parts, where the correspondence associated with each of the at least two parts is the correspondence between the temperatures and the charging currents; and the terminal device is controlled to adjust the present charging current of the terminal device according to the lowest charging current in the determined charging currents, and the adjusted present charging current of the terminal device is equal to or lower than the lowest charging current, thereby avoiding overheating caused by an overhigh charging current, and accordingly eliminating a safety risk caused by the overheating in the fast charging process.

### BRIEF DESCRIPTION OF THE DRAWINGS

In order to illustrate technical solutions in embodiments of the present disclosure more clearly, the following briefly introduces the accompanying drawings required for describing the embodiments. Apparently, the accompanying drawings in the following description illustrate some but not exhaustive embodiments of the present disclosure. Those of ordinary skill in the art may also obtain other drawings based on these accompanying drawings without creative work.
FIG. 1 is a schematic flow chart illustrating a method for controlling fast charging according to an embodiment of the present disclosure.
FIG. 2 is a schematic diagram illustrating a correspondence between temperatures and charging currents that is associated with a battery and a correspondence between temperatures and charging currents that is associated with a central processing unit according to an embodiment of the present disclosure.
FIG. 3 is a schematic flow chart illustrating a method for controlling fast charging according to another embodiment of the present disclosure.
FIG. 4 is a schematic flow chart illustrating a method for controlling fast charging according to yet another embodiment of the present disclosure.
FIG. 5 is a schematic structural diagram illustrating a system for controlling fast charging according to an embodiment of the present disclosure.
FIG. 6 is a schematic structural diagram illustrating a terminal device according to an embodiment of the present disclosure.

### DETAILED DESCRIPTION

Technical solutions of embodiments of the present disclosure will be described below clearly and completely in conjunction with the accompanying drawings of the embodiments of the present disclosure. Apparently, merely some but not all embodiments of the present disclosure are described. Based on the embodiments of the present disclosure, all the other embodiments, which a person ordinarily skilled in the art may obtain without paying creative work fall within the scope of protection of the present disclosure.

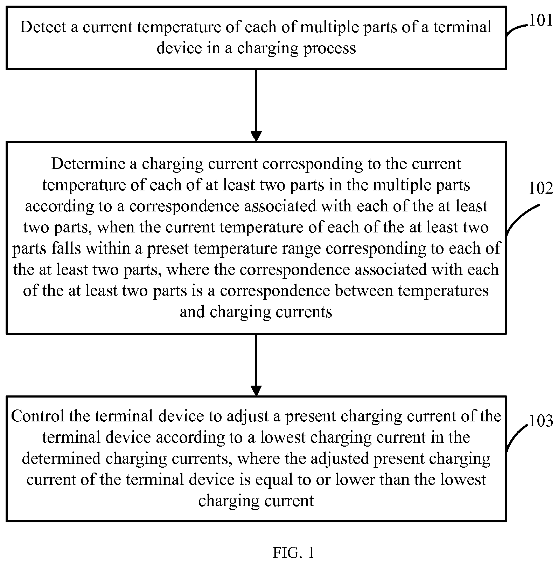

Referring to FIG. 1, a method for controlling fast charging according to an embodiment of the present disclosure is applied to a terminal device. The terminal device may be a smart phone, a tablet computer, a handheld computer, or the like. The method includes the following.

Step 101, a current temperature of each of multiple parts of the terminal device is detected in a charging process.

Specifically, the current temperatures of multiple heating parts such as a battery, a central processing unit, and a screen of the terminal device can be detected in a hardware or software manner. For example, for a chip having a temperature output port, the current temperature can be obtained in the software manner. For a component without a temperature output port, the current temperature can be obtained via a temperature sensor.

Step 102, when the current temperature of each of at least two parts in the multiple parts falls within a preset temperature range corresponding to each of the at least two parts, a charging current corresponding to the current temperature of each of the at least two parts is determined according to a correspondence associated with each of the at least two parts, where the correspondence associated with each of the at least two parts is a correspondence between temperatures and charging currents.

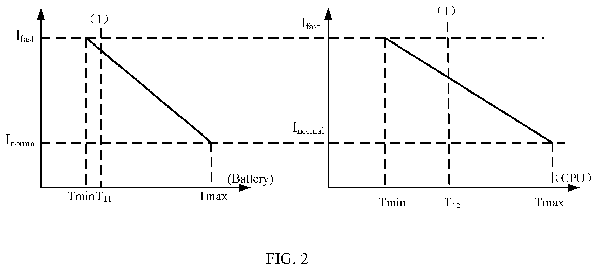

Specifically, for each of the multiple parts, in the correspondence between the temperatures and the charging currents, the charging currents decrease as the temperatures increase (as illustrated in FIG. 2). That is to say, the higher the current temperature is, the lower an allowable charging current is, i.e., when the current temperature is high, a low charging current needs to be adopted to charge the terminal device, thereby avoiding overheating of the terminal device.

Step 103, the terminal device is controlled to adjust a present charging current of the terminal device according to a lowest charging current in the determined charging currents, and the adjusted present charging current of the terminal device is equal to or lower than the lowest charging current.

Specifically, as illustrated in FIG. 2, FIG. 2 illustrates a correspondence between temperatures and charging currents that is associated with a battery and a correspondence between temperatures and charging currents that is associated with a central processing unit. It is detected that the current temperature of the battery is T11 indicated by a dotted line (1), and the current temperature of the central processing unit is T12 indicated by the dotted line (1). For the battery, when the current temperature is T11, the allowable charging current is relatively high. For the central processing unit, the allowable charging current when the current temperature of the central processing unit is T12 is lower than the allowable charging current of the battery when the current temperature of the battery is T11. At this point, when the present charging current of the terminal device is higher than the charging current corresponding to the temperature T12 of the central processing unit, the present charging current of the terminal device needs to be decreased, and the adjusted present charging current of the terminal device is equal to or lower than the charging current corresponding to the temperature T12 of the central processing unit.

In the embodiment, when the current temperature of each of the at least two parts falls within the preset temperature range corresponding to each of the at least two parts, the charging current corresponding to the current temperature of each of the at least two parts is determined according to the correspondence associated with each of the at least two parts, where the correspondence associated with each of the at least two parts is the correspondence between the temperatures and the charging currents; the terminal device is controlled to adjust the present charging current of the terminal device according to the lowest charging current in the determined charging currents, and the adjusted present charging current of the terminal device is equal to or lower than the lowest charging current, thereby avoiding overheating caused by an overhigh charging current, and accordingly eliminating a safety risk caused by the overheating in the fast charging process.

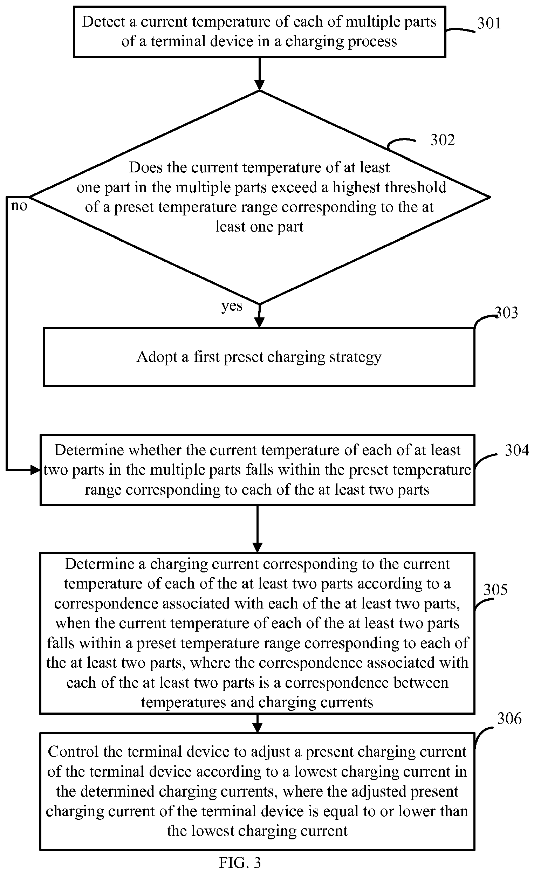

Referring to FIG. 3, FIG. 3 illustrates a method for controlling fast charging according to another embodiment of the present disclosure. The method includes the following.

Step 301, a current temperature of each of multiple parts of a terminal device is detected in a charging process. Step 301 is similar to step 101, and details are not repeated herein.

Step 302, whether the current temperature of at least one part in the multiple parts exceeds a highest threshold of a preset temperature range corresponding to the at least one part is determined. If yes, step 303 is executed; otherwise, step 304 is executed.

Step 303, a first preset charging strategy is adopted.

Specifically, the first preset charging strategy may be stopping charging or decreasing a present charging current of the terminal device by a preset amount. For example, when the number of parts each having the current temperature higher than a highest threshold of a corresponding preset temperature range is large, charging can be immediately stopped, thereby eliminating a safety risk caused by overheating of the terminal device. When the number of parts each having the current temperature higher than a highest threshold of a corresponding preset temperature range is small, for example, one or two, the present charging current of the terminal device is decreased by the preset amount, thereby ensuring normal charging of the terminal device while decreasing heat generated by the terminal device.

Step 304, whether the current temperature of each of at least two parts in the multiple parts falls within a preset temperature range corresponding to each of the at least two parts is determined.

Step 305, when the current temperature of each of the at least two parts in the multiple parts falls within the preset temperature range corresponding to each of the at least two parts, a charging current corresponding to the current temperature of each of the at least two parts is determined according to a correspondence associated with each of the at least two parts, where the correspondence associated with each of the at least two parts is a correspondence between temperatures and charging currents.

Step 306, the terminal device is controlled to adjust the present charging current of the terminal device according to a lowest charging current in the determined charging currents, and the adjusted present charging current of the terminal device is equal to or lower than the lowest charging current. Steps 305 and 306 are similar to steps 102 and 103, respectively, and details are not repeated herein.

In the embodiment, when the current temperatures of a number of parts respectively fall within corresponding preset temperature ranges, the terminal device is controlled to adjust the present charging current of the terminal device according to the lowest charging current in the determined charging currents, thereby eliminating a safety risk caused by an overhigh charging current. Furthermore, when the temperatures of certain parts of the terminal device are too high, the strategy of stopping charging immediately or decreasing the present charging current of the terminal device by the preset amount is adopted to eliminate the safety risk caused by the overheating of the terminal device.

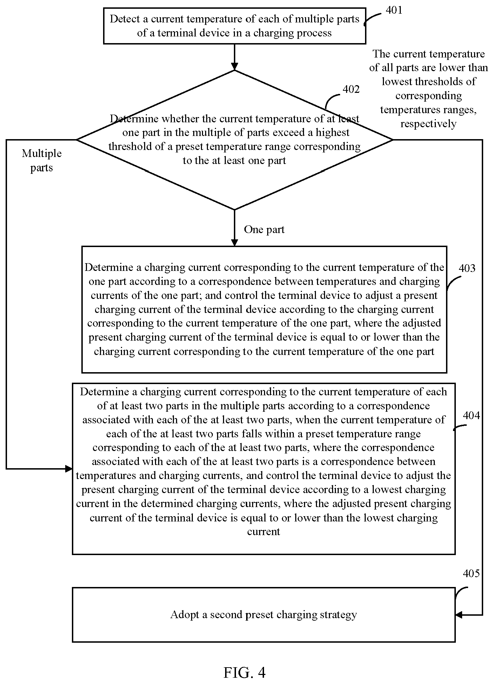

Referring to FIG. 4, FIG. 4 is a schematic flow chart illustrating a method for controlling fast charging according to yet another embodiment of the present disclosure. The method includes the following.

Step 401, the current temperature of each of multiple parts of a terminal device is detected in a charging process. Step 401 is similar to step 101, and details are not repeated herein.

Step 402, whether the current temperature of at least one part in the multiple parts falls within a preset temperature range corresponding to the at least one part is determined. When only one part in which the current temperature falls within a preset temperature range corresponding to the only one part, step 403 is executed. When the current temperature of each of at least two parts in the multiple parts falls within a preset temperature range corresponding to each of the at least two parts, step 404 is executed. When the current temperature of any part in the multiple parts is lower than a lowest threshold of a preset temperature range corresponding to the any part, step 405 is executed.

Step 403, a charging current corresponding to the current temperature of the only one part is determined according to a correspondence associated with the only one part, where the correspondence associated with the only one part is a correspondence between temperatures and charging currents; the terminal device is controlled to adjust a present charging current of the terminal device according to the charging current corresponding to the current temperature of the only one part, and the adjusted present charging current of the terminal device is lower than the charging current corresponding to the current temperature of the only one part.

Step 404, a charging current corresponding to the current temperature of each of the at least two parts is determined according to a correspondence associated with each of the at least two parts, where the correspondence associated with each of the at least two parts is a correspondence between temperatures and charging currents; the terminal device is controlled to adjust the present charging current of the terminal device according to a lowest charging current in the determined charging currents, and the adjusted present charging current of the terminal device is equal to or lower than the lowest charging current.

Step 405, a second preset charging strategy is adopted.

Specifically, the second preset charging strategy may be increasing the present charging current of the terminal device by a preset amount. When the current temperature of any part in the multiple parts is lower than a lowest threshold of a preset temperature range corresponding to the any part, it indicates that heat of the terminal device is not high, and the present charging current of the terminal device can be increased to improve a charging speed.

In the embodiment, when the current temperatures of a number of parts respectively fall within corresponding preset temperature ranges, the terminal device is controlled to adjust the present charging current of the terminal device according to the lowest charging current in the determined charging currents; when only one part in which the current temperature falls within a preset temperature range corresponding to the only one part, the terminal device is controlled to adjust the present charging current of the terminal device according to the charging current corresponding to the current temperature of the only one part. Therefore, a safety risk caused by an overhigh charging current can be eliminated. Furthermore, when the current temperature of any part in the multiple parts is lower than a lowest threshold of a preset temperature range corresponding to the any part, the present charging current of the terminal device is increased by the preset amount, thereby improving the charging speed without bringing a safety risk.

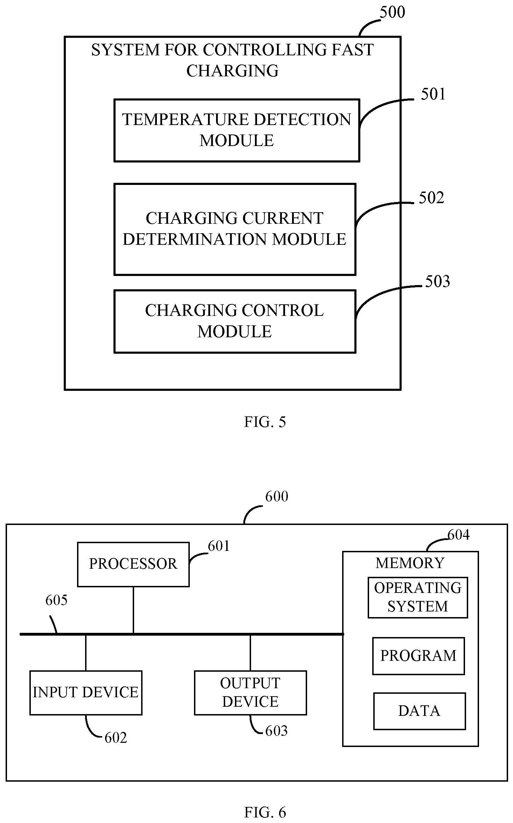

Referring to FIG. 5, FIG. 5 is a schematic structural diagram illustrating a system for controlling fast charging according to an embodiment of the present disclosure. The system 500 for controlling fast charging is applied to a terminal device. The terminal device may be a smart phone, a tablet computer, a handheld computer, or the like. The system 500 includes a temperature detection module 501, a charging current determination module 502, and a charging control module 503.

The temperature detection module 501 is configured to detect a current temperature of each of multiple parts of the terminal device in a charging process.

Specifically, the current temperatures of multiple heating parts such as a battery, a central processing unit, and a screen of the terminal device can be detected in a hardware or software manner. For example, for a chip having a temperature output port, the current temperature can be obtained in the software manner. For a component without a temperature output port, the current temperature can be obtained via a temperature sensor.

The charging current determination module 502 is configured to determine a charging current corresponding to the current temperature of each of at least two parts in the multiple parts according to a correspondence associated with each of the at least two parts, when the current temperature of each of the at least two parts falls within a preset temperature range corresponding to each of the at least two parts, where the correspondence associated with each of the at least two parts is a correspondence between temperatures and charging currents.

Specifically, for each of the multiple parts, in the correspondence between the temperatures and the charging currents, the charging currents decrease as the temperatures increase (as illustrated in FIG. 2). That is to say, the higher the current temperature is, the lower an allowable charging current is, i.e., when the current temperature is high, a low charging current needs to be adopted to charge the terminal device, thereby avoiding overheating of the terminal device.

The charging control module 503 is configured to control the terminal device to adjust a present charging current of the terminal device according to a lowest charging current in the determined charging currents, and the adjusted present charging current of the terminal device is equal to or lower than the lowest charging current.

Specifically, as illustrated in FIG. 2, FIG. 2 illustrates a correspondence between temperatures and charging currents that is associated with a battery and a correspondence between temperatures and charging currents that is associated with a central processing unit. It is detected that the current temperature of the battery is T11 indicated by a dotted line (1), and the current temperature of the central processing unit is T12 indicated by the dotted line (1). For the battery, when the current temperature is T11, the allowable charging current is relatively high. For the central processing unit, the allowable charging current when the current temperature of the central processing unit is T12 is lower than the allowable charging current of the battery when the current temperature of the battery is T11. At this point, when the present charging current of the terminal device is higher than the charging current corresponding to the temperature T12 of the central processing unit, the present charging current of the terminal device needs to be decreased, and the adjusted present charging current of the terminal device is equal to or lower than the charging current corresponding to the temperature T12 of the central processing unit.

In the embodiment, when the current temperature of each of the at least two parts falls within the preset temperature range corresponding to each of the at least two parts, the charging current corresponding to the current temperature of each of the at least two parts is determined according to the correspondence associated with each of the at least two parts, where the correspondence associated with each of the at least two parts is the correspondence between the temperatures and the charging currents; the terminal device is controlled to adjust the present charging current of the terminal device according to the lowest charging current in the determined charging currents, and the present charging current of the terminal device is equal to or lower than the lowest charging current, thereby avoiding overheating caused by an overhigh charging current, and accordingly eliminating a safety risk caused by the overheating in the fast charging process.

Alternatively, the charging control module 503 is further configured to adopt a first preset charging strategy when the current temperature of at least one part in the multiple parts exceeds a highest threshold of a preset temperature range corresponding to the at least one part.

Specifically, the first preset charging strategy may be stopping charging or decreasing the present charging current of the terminal device by a preset amount. For example, when the number of parts each having the current temperature higher than a highest threshold of a corresponding preset temperature range is large, charging can be immediately stopped, thereby eliminating a safety risk caused by the overheating of the terminal device. When the number of parts each having the current temperature higher than a highest threshold of a corresponding preset temperature range is small, for example, one or two, the present charging current of the terminal device is decreased by the preset amount, thereby ensuring normal charging of the terminal device while decreasing heat of the terminal device.

Alternatively, the charging control module 503 is further configured, when only one part in which the current temperature falls within a preset temperature range corresponding to the only one part, to control the terminal device to adjust the present charging current of the terminal device according to a charging current corresponding to the current temperature of the only one part, where the adjusted present charging current of the terminal device is equal to or lower than the charging current corresponding to the current temperature of the only one part; and the charging control module 503 is further configured to adopt a second preset charging strategy when the current temperature of any part in the multiple parts is lower than a lowest threshold of a preset temperature range corresponding to the any part.

Specifically, the second preset charging strategy may be increasing the present charging current of the terminal device by a preset amount. When the current temperature of any part in the multiple parts is lower than a lowest threshold of a preset temperature range corresponding to the any part, it indicates that heat of the terminal device is not high, and the charging current of the terminal device can be increased to improve a charging speed.

Referring to FIG. 6, in an embodiment of the present disclosure, a terminal device 600 can be configured to execute the methods for controlling fast charging according to the embodiments of the present disclosure. The terminal device 600 may include at least one processor 601, at least one input device 602, at least one output device 603, a memory 604 and so on. These components communicate with each other via one or more buses 605. A person of ordinary skill in the art can understand that the structure of the terminal device 600 illustrated in FIG. 6 does not limit the embodiments of the present disclosure. The terminal device may be a bus structure or a star structure. The terminal device may include more or fewer components than illustrated, or certain components may be combined, or the terminal device may include different component arrangements.

In the embodiment of the present disclosure, the processor 601 is a control center of the terminal device 600, and connects various parts of the whole terminal device 600 through various interfaces and lines, runs or executes software programs and/or units stored in the memory 604 and invokes data stored in the memory 604 to perform various functions of the terminal device 600 and process data. The processor 601 may be formed by one or more integrated circuits (ICs). For example, the processor 601 may be formed by a single encapsulated IC, and also may be formed by connecting multiple encapsulated ICs having the same function or different functions. For example, the processor 601 may just include a central processing unit (CPU), and also may be a combination of the CPU, a digital signal processor (DSP), a graphic processing unit (GPU), and various control chips. In the embodiment of the present disclosure, the CPU may include a signal core, or multiple cores.

In the embodiment of the present disclosure, the input device 602 may include a standard touch screen, a keyboard, and so on, and also may include a wired interface, a wireless interface, and so on, to realize interaction between a user and the terminal device 600.

In the embodiment of the present disclosure, the output device 603 may be a display screen, a loudspeaker, and may include a wired interface, a wireless interface, and so on.

In the embodiment of the present disclosure, the memory 604 may include at least one of the following: a random access memory, a nonvolatile memory, and an external memory. The memory 604 may store program codes. The processor 601 performs any of the above methods for controlling fast charging by invoking the program codes stored in the memory 604. The memory 604 mainly includes a program storage area and a data storage area. The program storage area may store an operating system, applications for at least one function, and so on. The data storage area may store data created according to usage of the terminal device and so on. In the embodiment of the present disclosure, the operating system may be Android system, iOS system, Windows operating system, or other.

The above disclosures illustrate preferable embodiments of the present disclosure. It should be pointed out that a person of ordinary skill in the art can make several changes and polish without departing from the principle of the present disclosure, and these changes and polish shall be deemed as the scope of protection of the present disclosure.

## Claims

1. A method for controlling fast charging, comprising:
detecting a current temperature of each of a plurality of parts of a terminal device in a charging process;
determining a charging current corresponding to the current temperature of each of at least two parts in the plurality of parts according to a correspondence associated with each of the at least two parts, when the current temperature of each of the at least two parts falls within a preset temperature range corresponding to each of the at least two parts, wherein the correspondence associated with each of the at least two parts is a correspondence between temperatures and charging currents; and
controlling the terminal device to adjust a present charging current of the terminal device according to a lowest charging current in the determined charging currents, wherein the adjusted present charging current of the terminal device is equal to or lower than the lowest charging current.

2. The method for controlling fast charging of claim 1, further comprising the following, after detecting the current temperature of each of the plurality of parts of the terminal device in the charging process:
determining whether the current temperature of at least one part in the plurality of parts exceeds a highest threshold of a preset temperature range corresponding to the at least one part;
adopting a first preset charging strategy when the current temperature of the at least one part in the plurality of parts exceeds the highest threshold of the preset temperature range corresponding to the at least one part;
determining whether the current temperature of each of the at least two parts in the plurality of parts falls within the preset temperature range corresponding to each of the at least two parts, when the current temperature of any part in the plurality of parts fails to exceed a highest threshold of a preset temperature range corresponding to the any part; and
executing the operation of determining the charging current corresponding to the current temperature of each of the at least two parts according to the correspondence associated with each of the at least two parts, when the current temperature of each of the at least two parts in the plurality of parts falls within the preset temperature range corresponding to each of the at least two parts, wherein the correspondence associated with each of the at least two parts is the correspondence between the temperatures and the charging currents; and executing the operation of controlling the terminal device to adjust the present charging current of the terminal device according to the lowest charging current in the determined charging currents, wherein the adjusted present charging current of the terminal device is equal to or lower than the lowest charging current.

3. The method for controlling fast charging of claim 1, further comprising the following, after detecting the current temperature of each of the plurality of parts of the terminal device in the charging process:
determining whether the current temperature of at least one part in the plurality of parts falls within a preset temperature range corresponding to the at least one part;
determining, when only one part in which the current temperature falls within a preset temperature range corresponding to the only one part in the plurality of parts, a charging current corresponding to the current temperature of the only one part according to a correspondence between temperatures and charging currents of the only one part; and controlling the terminal device to adjust the present charging current of the terminal device according to the charging current corresponding to the current temperature of the only one part, wherein the adjusted present charging current of the terminal device is equal to or lower than the charging current corresponding to the current temperature of the only one part;
executing the operation of determining the charging current corresponding to the current temperature of each of the at least two parts according to the correspondence associated with each of the at least two parts, when the current temperature of each of the at least two parts in the plurality of parts falls within the preset temperature range corresponding to each of the at least two parts, wherein the correspondence associated with each of the at least two parts is the correspondence between the temperatures and the charging currents; and executing the operation of controlling the terminal device to adjust the present charging current of the terminal device according to the lowest charging current in the determined charging currents, wherein the adjusted present charging current of the terminal device is equal to or lower than the lowest charging current; and
adopting a second preset charging strategy when the current temperature of any part in the plurality of parts is lower than a lowest threshold of a preset temperature range corresponding to the any part.

4. The method for controlling fast charging of any of claims 1 to 3, wherein for each of the plurality of parts, in the correspondence between the temperatures and the charging currents, the charging currents decrease as the temperatures increase.

5. The method for controlling fast charging of any of claims 1 to 3, wherein detecting the current temperature of each of the plurality of parts of the terminal device comprises:
detecting at least a temperature of a battery of the terminal device, a temperature of a central processing unit of the terminal device, and a temperature of a display screen of the terminal device.

6. A system for controlling fast charging, comprising:
a temperature detection module, configured to detect a current temperature of each of a plurality of parts of a terminal device in a charging process;
a charging current determination module, configured to determine a charging current corresponding to the current temperature of each of at least two parts in the plurality of parts according to a correspondence associated with each of the at least two parts, when the current temperature of each of the at least two parts falls within a preset temperature range corresponding to each of the at least two parts, wherein the correspondence associated with each of the at least two parts is a correspondence between temperatures and charging currents; and
a charging control module, configured to control the terminal device to adjust a present charging current of the terminal device according to a lowest charging current in the determined charging currents, wherein the adjusted present charging current of the terminal device is equal to or lower than the lowest charging current.

7. The system for controlling fast charging of claim 6, wherein the charging control module is further configured to adopt a first preset charging strategy when the current temperature of at least one part in the plurality of parts exceeds a highest threshold of a preset temperature range corresponding to the at least one part.

8. The system for controlling fast charging of claim 6, wherein the charging control module is further configured, when only one part in which the current temperature falls within a preset temperature range corresponding to the only one part in the plurality of parts, to control the terminal device to adjust the present charging current of the terminal device according to a charging current corresponding to the current temperature of the only one part, wherein the adjusted present charging current of the terminal device is equal to or lower than the charging current corresponding to the current temperature of the only one part; and to adopt a second preset charging strategy when the current temperature of any part in the plurality of parts is lower than a lowest threshold of a preset temperature range corresponding to the any part.

9. The system for controlling fast charging of any of claims 6 to 8, wherein for each of the plurality of parts, in the correspondence between the temperatures and the charging currents, the charging currents decrease as the temperatures increase.

10. The system for controlling fast charging of any of claims 6 to 8, wherein the temperature detection module configured to detect the current temperature of each of the plurality of parts of the terminal device in the charging process is configured to detect at least a temperature of a battery of the terminal device, a temperature of a central processing unit of the terminal device, and a temperature of a display screen of the terminal device.

11. A terminal device, comprising:
a memory storing a set of program codes; and
a processor configured to invoke the set of program codes to execute the following:
detecting a current temperature of each of a plurality of parts of the terminal device in a charging process;
determining a charging current corresponding to the current temperature of each of at least two parts in the plurality of parts according to a correspondence associated with each of the at least two parts, when the current temperature of each of the at least two parts falls within a preset temperature range corresponding to each of the at least two parts, wherein the correspondence associated with each of the at least two parts is a correspondence between temperatures and charging currents; and
controlling the terminal device to adjust a present charging current of the terminal device according to a lowest charging current in the determined charging currents, wherein the adjusted present charging current of the terminal device is equal to or lower than the lowest charging current.

12. The terminal device of claim 11, wherein the set of program codes are further invoked to execute the following, after detecting the current temperature of each of the plurality of parts of the terminal device in the charging process:
determining whether the current temperature of at least one part in the plurality of parts exceeds a highest threshold of a preset temperature range corresponding to the at least one part;
adopting a first preset charging strategy when the current temperature of the at least one part in the plurality of parts exceeds the highest threshold of the preset temperature range corresponding to the at least one part;
determining whether the current temperature of each of the at least two parts in the plurality of parts falls within the preset temperature range corresponding to each of the at least two parts, when the current temperature of any part in the plurality of parts fails to exceed a highest threshold of a preset temperature range corresponding to the any part; and
executing the operation of determining the charging current corresponding to the current temperature of each of the at least two parts according to the correspondence associated with each of the at least two parts, when the current temperature of each of the at least two parts in the plurality of parts falls within the preset temperature range corresponding to each of the at least two parts, wherein the correspondence associated with each of the at least two parts is the correspondence between the temperatures and the charging currents; and executing the operation of controlling the terminal device to adjust the present charging current of the terminal device according to the lowest charging current in the determined charging currents, wherein the adjusted present charging current of the terminal device is equal to or lower than the lowest charging current.

13. The terminal device of claim 11, wherein the set of program codes are further invoked to execute the following, after detecting the current temperature of each of the plurality of parts of the terminal device in the charging process:
determining whether the current temperature of at least one part in the plurality of parts falls within a preset temperature range corresponding to the at least one part;
determining, when only one part in which the current temperature falls within a preset temperature range corresponding to the only one part in the plurality of parts, a charging current corresponding to the current temperature of the only one part according to a correspondence between temperatures and charging currents of the only one part; and controlling the terminal device to adjust the present charging current of the terminal device according to the charging current corresponding to the current temperature of the only one part, wherein the charging current of the terminal device is equal to or lower than the charging current corresponding to the current temperature of the only one part;
executing the operation of determining the charging current corresponding to the current temperature of each of the at least two parts according to the correspondence associated with each of the at least two parts, when the current temperature of each of the at least two parts in the plurality of parts falls within the preset temperature range corresponding to each of the at least two parts, wherein the correspondence associated with each of the at least two parts is the correspondence between the temperatures and the charging currents; and executing the operation of adjusting the present charging current of the terminal device according to the lowest charging current in the determined charging currents, wherein the adjusted present charging current of the terminal device is equal to or lower than the lowest charging current; and
adopting a second preset charging strategy when the current temperature of any part in the plurality of parts is lower than a lowest threshold of a preset temperature range corresponding to the any one part.

14. The terminal device of any of claims 11 to 13, wherein for each of the plurality of parts, in the correspondence between the temperatures and the charging currents, the charging currents decrease as the temperatures increase.

15. The terminal device of any of claims 11 to 13, wherein detecting the current temperature of each of the plurality of parts of the terminal device comprises:
detecting at least a temperature of a battery of the terminal device, a temperature of a central processing unit of the terminal device, and a temperature of a display screen of the terminal device.
